(19) Europäisches Patentamt
European Patent Office
Office européen des brevets

(11) EP 4 675 653 A1

(12) **EUROPEAN PATENT APPLICATION**
published in accordance with Art. 153(4) EPC

(43) Date of publication:
07.01.2026 Bulletin 2026/02

(21) Application number: 24845186.6

(22) Date of filing: 28.05.2024

(51) International Patent Classification (IPC):
H01F 27/245 (2006.01)    C21D 8/12 (2006.01)
C22C 38/00 (2006.01)    C22C 38/60 (2006.01)
H01F 30/10 (2006.01)

(52) Cooperative Patent Classification (CPC):
C21D 8/12; C22C 38/00; C22C 38/60;
H01F 27/245; H01F 30/10

(86) International application number:
PCT/JP2024/019596

(87) International publication number:
WO 2025/022804 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.07.2023 JP 2023119436

(71) Applicant: JFE Steel Corporation
Tokyo 100-0011 (JP)

(72) Inventors:
• ICHIHARA, Yoshihisa
Tokyo 100-0011 (JP)
• OMURA, Takeshi
Tokyo 100-0011 (JP)
• INOUE, Hirotaka
Tokyo 100-0011 (JP)
• NAKAMURA, Koji
Tokyo 100-0011 (JP)

(74) Representative: Hoffmann Eitle
Patent- und Rechtsanwälte PartmbB
Arabellastraße 30
81925 München (DE)

(54) **IRON CORE FOR TRANSFORMER AND TRANSFORMER**

(57) By controlling variation in insulating coating thickness of grain-oriented electrical steel sheets with insulating coating used in an iron core, an increase in building factor caused by magnetic flux transfer in a lamination direction of the iron core is suppressed. An iron core for a transformer including a lamination of a plurality of single layers each including one or more sheets of grain-oriented electrical steel sheet with insulating coating. Each of the single layers has at least one steel sheet discontinuity extending in a direction that intersects with a direction of magnetic flux flow in the single layer. A standard deviation $\sigma$ of a thickness of the insulating coating in a region between a steel sheet discontinuity of one of the single layers and a steel sheet discontinuity of another of the single layers adjacent in a lamination direction is 2 $\mu$m or more and 5 $\mu$m or less.

FIG. 3

**Description**

TECHNICAL FIELD

The present disclosure relates to an iron core for a transformer and a transformer.

BACKGROUND

Grain-oriented electrical steel sheets are used as material for iron cores of transformers. In such a transformer, heat loss (iron loss) that occurs when grain-oriented electrical steel sheets are AC magnetized affects the efficiency of the transformer, and therefore progress is being made in development of grain-oriented electrical steel sheets that have low iron loss. The iron loss of grain-oriented electrical steel sheets is mainly composed of hysteresis loss and eddy current loss.

Methods to reduce hysteresis loss have been developed, such as a method of high alignment with the (110)[001] orientation, called GOSS orientation, in the rolling direction of steel sheets, a method of decreasing impurities in steel sheets, and the like. Methods to improve eddy current losses have been developed, such as a method of increasing the electrical resistance of steel sheets by adding Si, a method of applying film tension in the rolling direction of steel sheets, and the like. However, these methods have production limitations when pursuing even lower iron loss in grain-oriented electrical steel sheets.

Therefore, magnetic domain refining technology has been developed as a method to pursue even lower iron loss in grain-oriented electrical steel sheets. Magnetic domain refining technology is a method of refining the width of 180° magnetic domains (main magnetic domains) that are formed along the rolling direction by introducing non-uniformity in magnetic flux into a steel sheet after final annealing or after baking of a tension coating. By refining the magnetic domains, it is possible to reduce the iron loss, particularly the eddy current loss, of a grain-oriented electrical steel sheet. Various methods have been proposed for introducing non-uniformity in the magnetic flux, such as forming grooves or introducing local strain.

For example, in Patent Literature (PTL) 1, a technology for introducing linear grooves having a width of 300 $\mu$m or less and a depth of 100 $\mu$m or less into a steel sheet surface is proposed. This technology has improved the iron loss that was 0.80 W/kg or more to 0.70 W/kg or less. Further, in PTL 2, a technology is proposed for irradiating a steel sheet surface after secondary recrystallization with a plasma flame in the sheet transverse direction of to locally introduce thermal strain. A steel sheet obtained according to the technology had, for example, a magnetic flux density ($B_8$) of 1.935 T when excited with a magnetizing force of 800 A/m, and an iron loss ($W_{17/50}$) of 0.680 W/kg when excited with a maximum magnetic flux density of 1.7 T and a frequency of 50 Hz.

The method of introducing linear grooves as described in PTL 1 is called heat-resistant magnetic domain refining, because the magnetic domain refining effect is not lost even after carrying out stress relief annealing after iron core formation. On the other hand, the method of introducing thermal strain as described in PTL 2 is called non-heat-resistant magnetic domain refining, because stress relief annealing makes the effect of the introduced thermal strain unobtainable.

The iron loss of grain-oriented electrical steel sheets is measured using sinusoidal excitation in the rolling direction, but it is known that magnetization behavior inside an actual transformer is more complex, resulting in an increase in transformer loss over that of the iron loss of the grain-oriented electrical steel sheets used. Such an increase is called the building factor (= core loss of the entire transformer / iron loss of the grain-oriented electrical steel sheets used). Decreasing the building factor is essential to producing more efficient transformers.

Here, iron cores are roughly divided into two types, wound iron cores and laminate iron cores, depending on structure.

A representative example of a wound iron core is a lap core type of wound iron core. A lap core type of wound iron core is produced by shearing a grain-oriented electrical steel sheet for each winding to obtain a single sheet or a plurality of sheets stacked together to form a single layer, and then laminating (overlapping) such single layers and pushing them into a coil. At this time, in the lap core type, the shearing location of the steel sheets is changed periodically. When viewed from the side, the sheared locations appear to overlap for each layer, so this type is called the lap core type.

On the other hand, a laminate iron core is an iron core constructed by laminating steel sheets cut to defined shapes. As a specific example, a plurality of pieces obtained by shearing oriented electrical steel sheets (obliquely cut) are combined on the same plane in a frame shape, or a plurality of such combinations are stacked together to form a single layer, and then a plurality of such single layers are laminated together to produce the product.

Therefore, in both the wound iron core and the laminate iron core, sheared ends of the grain-oriented electrical steel sheets in each of the single layers are joined together via an air gap. In the vicinity of such joint portions, when the iron core is excited, magnetic flux transfer occurs in the lamination direction of the single layer, increasing iron loss due to in-plane eddy current loss. This is known to be one of the factors behind the building factor increase mentioned above.

Further, in recent years, there has been an increasing demand for large-scale power generation farms using renewable energy such as wind and solar power. Power generation sites for such renewable energy are often far away from sites of high energy demand, and there is an increasing demand for direct current transmission to suppress transmission loss. In direct current transmission, transformers that operate at a higher frequency range (100 Hz to 10,000 Hz) than conventional commercial frequencies (50 Hz or 60 Hz) are used. In such transformers, the high frequency causes large changes in the magnetic flux inside the iron core over time, and the building factor increases significantly due to the magnetic flux transfer.

Various methods for improving the building factor have been studied. For example, in PTL 3, magnetic domain refining treatment by introducing strain to grain-oriented electrical steel sheets in the vicinity of joint portions is proposed. Further, in PTL 4, inclining joint portions in the winding direction is proposed, in order to improve iron loss due to magnetic flux transfer.

CITATION LIST

Patent Literature

PTL 1: JP H06-022179 B2
PTL 2: JP H07-192891 A
PTL 3: JP 2020-096100 A
PTL 4: JP 2005-150507 A

SUMMARY

(Technical Problem)

Although all of the proposals described above are effective, they are proposals related to iron core design, and therefore there is a problem of increasing production costs. For example, adding a new process of introducing strain or changing shearing direction leads to an increase in production costs.

In view of the circumstances described above, it would be helpful to suppress an increase in the building factor caused by magnetic flux transfer in the lamination direction of an iron core, by controlling an insulating coating thickness of grain-oriented electrical steel sheets with insulating coating used in the iron core.

(Solution to Problem)

The inventors conducted intensive studies into solutions to address the problem described above.

First, in order to investigate the degree of magnetic flux transfer at joint portions, a search coil was used to investigate the amount of magnetic flux transfer at joint portions. As a result, it was found that the amount of magnetic flux transfer differed depending on the measurement location, even in the vicinity of the joint portion. The eddy current loss generated in a steel sheet is proportional to the square of the magnetic flux density. Therefore, variation in magnetic flux transfer amount in the sheet plane causes localized increases in eddy current loss and a significant increase in iron loss at joint portions.

A more detailed investigation was carried out into the variation in the amount of magnetic flux transfer. As a result, it was found that the amount of magnetic flux transfer varies due to the distance not being constant between magnetic materials in the lamination direction, that is, the distance not being constant between the steel substrate sheets of the grain-oriented electrical steel sheets. The surface of a grain-oriented electrical steel sheet has a metal oxide layer formed on the steel substrate surface and a tension coating applied on top of the metal oxide layer. It has been newly discovered that, because these shapes are not flat, there is variation in the distance between the base steel substrate sheets.

The present disclosure is based on the findings described above. Primary features of the present disclosure are as follows.

(1) An iron core for a transformer, the iron core comprising a lamination of a plurality of single layers each comprising one or more sheets of grain-oriented electrical steel sheet with insulating coating, wherein

each of the single layers has at least one steel sheet discontinuity extending in a direction that intersects with a direction of magnetic flux flow in the single layer, and
a standard deviation $\sigma$ of a thickness of the insulating coating in a region between a steel sheet discontinuity of one of the single layers and a steel sheet discontinuity of another of the single layers adjacent in a lamination direction is 2 $\mu$m or more and 5 $\mu$m or less.

(2) The iron core for a transformer according to (1), wherein between the steel sheet discontinuity of one of the single layers and the steel sheet discontinuity of another of the single layers adjacent in the lamination direction, an interval Δd in the direction of magnetic flux flow is 1 mm or more and 20 mm or less.

(3) The iron core for a transformer according to (1) or (2), wherein the iron core is a wound iron core of the grain-oriented electrical steel sheets wound in the rolling direction of the steel sheets.

(4) The iron core for a transformer according to (3), wherein the wound iron core has a bent portion that is bent along the winding direction.

(5) The iron core for a transformer according to (1) or (2), wherein the iron core is a laminate iron core comprising a lamination of a plurality of single layers each comprising a combination of a plurality of pieces of grain-oriented electrical steel sheet in the same plane.

(6) A transformer comprising the iron core for a transformer according to any one of (1) to (5).

(Advantageous Effect)

According to the present disclosure, in an iron core for a transformer using grain-oriented electrical steel sheets, magnetic flux transfer in the lamination direction can be suppressed, thereby decreasing the building factor. Therefore, according to the present disclosure, an iron core for a transformer that has low core loss can be provided.

BRIEF DESCRIPTION OF THE DRAWINGS

In the accompanying drawings:

FIG. 1 is a schematic diagram illustrating an example of a three-phase three-leg wound iron core;
FIG. 2 is a schematic diagram illustrating an example of a three-phase three-leg laminate iron core;
FIG. 3 is a schematic diagram illustrating an example of a lamination structure of an iron core;
FIG. 4 is a graph illustrating the effect of standard deviation σ of insulating coating thickness on building factor (BF);
FIG. 5 is a graph illustrating the effect of an interval Δd between joint portion end faces of grain-oriented electrical steel sheets on building factor (BF); and
FIG. 6A, FIG. 6B, and FIG. 6C are schematic diagrams illustrating a C-section image of an insulating coating obtained by SEM.

DETAILED DESCRIPTION

The following is a description of the experimental results that led to the completion of the present disclosure.

(Experiment 1)

Steel slabs having the chemical composition indicated in Table 1 were used to produce 0.23 mm thick steel strips of grain-oriented electrical steel sheets as test material by a typical production process. A single sheet test piece was cut out from the test material, and material iron loss ($W_{17/50}$) was measured by the single sheet magnetic property measurement method described in JIS C2556. $W_{17/50}$ means the iron loss when a single sheet test piece is AC magnetized in the longitudinal direction of the sample at 1.7 T and 50 Hz.

[Table 1]

Table 1

| Chemical composition (mass%)* | | | | | | | | |
|------|------|------|------|--------|-------|--------|-------|--------|
| C | Si | Mn | Ni | Al | N | Se | S | O |
| 0.08 | 3.4 | 0.1 | 0.01 | 0.0260 | 0.007 | 0.0110 | 0.003 | 0.0025 |
| * The balance being Fe and inevitable impurity. | | | | | | | | |

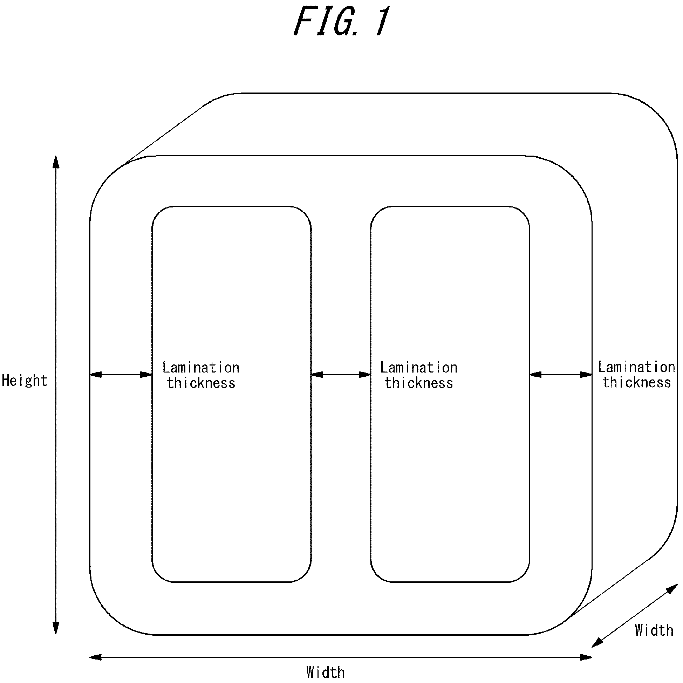

Next, three-phase three-leg wound iron cores, schematically illustrated in FIG. 1, were produced using the test material. That is, the test material (steel strip) was slit into a width of 100 mm, and wound in the rolling direction to form a single layer. A plurality of the single layers were laminated to a thickness of 30 mm to produce a three-phase three-leg iron core having a height of 300 mm and a width of 210 mm. Here, two types of wound cores were produced: a type in which the iron core corners are wound in an arc shape (Trancocore), and a type having two 45-degree bent portion corners (Unicore). The Trancocores and some of the Unicores were subjected to stress relief annealing (SRA) at 800 °C for 3 h in an Ar atmosphere.

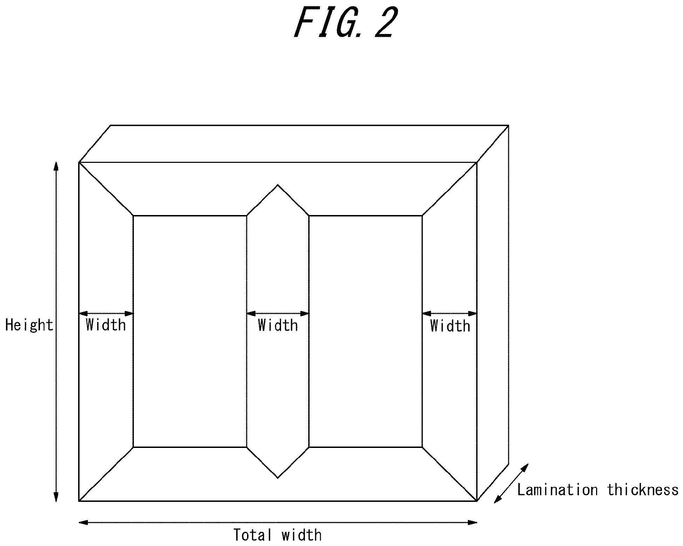

Further, three-phase three-leg laminate iron cores, schematically illustrated in FIG. 2, were produced using the test material. That is, an obliquely cut piece having a width of 100 mm was cut out from the test material, and a plurality of such obliquely cut pieces were combined in the same plane in the shape of a frame to form a single layer. A plurality of these single layers were laminated to a thickness of 30 mm to produce a three-phase three-leg iron core having a height of 420 mm and an overall width of 420 mm.

In each of the iron cores, each single layer has at least one steel sheet discontinuity extending in a direction intersecting the direction of magnetic flux flow. In each single layer, the sheared ends of the grain-oriented electrical steel sheets were joined via an air gap, that is, a steel sheet discontinuity. Hereinafter, such a steel sheet discontinuity is also referred to as a joint portion. In the wound iron core of FIG. 1, there are one or two joint portions within a single layer. Further, in the laminate iron core of FIG. 2, there are six joint portions in a single layer.

Further, the joint portions of the single layers that were laminated were offset in a stepwise manner in the direction of magnetic flux flow of the single layers so as not to coincide between adjacent single layers. This type of structure is called a step lap structure.

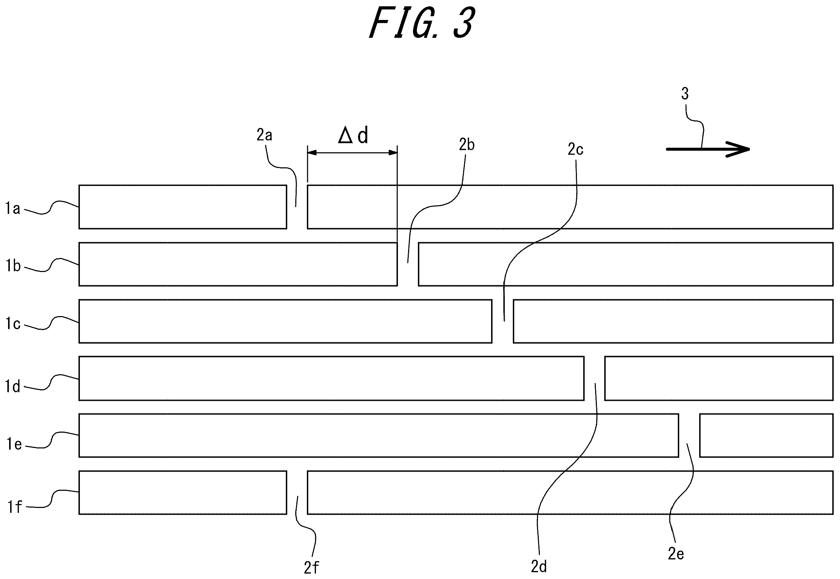

For example, FIG. 3 is a diagram schematically illustrating a structure of a six-layer portion of an iron core. The six single layers 1a to 1f have joint portions 2a to 2f, respectively. In the five steps of the single layers 1a to 1e, the positions of the joints 2a to 2e are shifted relative to one another by an interval $\Delta d$ in a direction 3 of magnetic flux flow. In the structure illustrated in FIG. 3, the positions of the joint portions are shifted among the five steps of the single layers 1a to 1e, while the position of the joint portion 2f of the single layer 1f coincides with the position of the joint portion 2a of the single layer 1a in the direction 3. Therefore, this structure is defined as a step lap structure in which five steps of the single layers 1a to 1e form one period. Of the many laminated single layers, only six layers are illustrated in FIG. 3. In a portion not illustrated, the step lap structure having five steps as one period is repeated, as in the single layers 1a to 1e.

In the wound iron cores and the laminate iron cores described above, a step lap structure with a seven step period was adopted. The above-mentioned mutual offset (interval) $\Delta d$ between the joint portions between adjacent layers was set to 8 mm in both the wound iron cores and the laminate iron cores.

Next, using these iron cores, transformer core loss was measured when the magnetic flux density in the iron core legs was 1.7 T at a frequency of 50 Hz. In the measurement, no-load loss was measured using a wattmeter. The building factor (BF) was calculated from the obtained transformer core loss and the material iron loss measured previously. After the above core loss measurements, ten C-section samples were cut out from the region of each iron core corresponding to the $\Delta d$, and the steel substrate-insulating coating layer was observed with a scanning electron microscope (SEM). From the observation results, the thickness of the insulating coating layer was calculated by the method described below, and a standard deviation $\sigma$ was calculated.

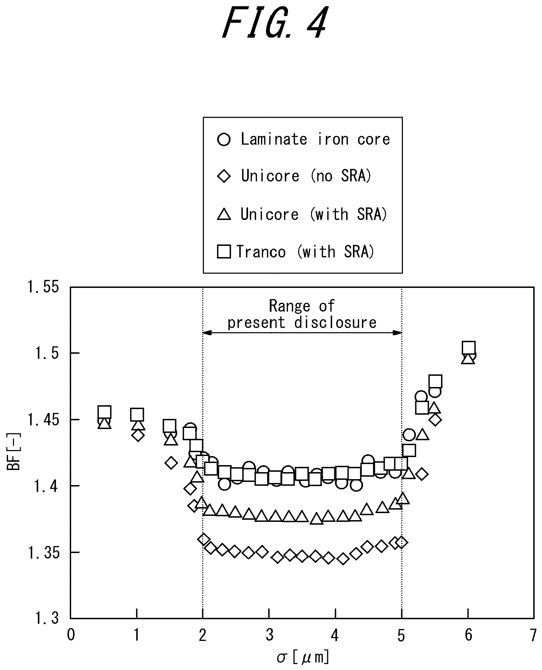

FIG. 4 is a graph in which the BF values obtained by the measurements are plotted against the standard deviation $\sigma$ of the insulating coating thickness. For all of the iron core configurations, a significant improvement in the building factor was confirmed when the standard deviation $\sigma$ was in a range from 2 $\mu$m to 5 $\mu$m. This is thought to be because when the standard deviation $\sigma$ exceeds 5 $\mu$m, magnetic flux transfer is concentrated in thin portions of the insulating coating, increasing the in-plane eddy current loss and increasing the building factor.

On the other hand, the building factor also increases in regions where the standard deviation $\sigma$ is less than 2 $\mu$m. Although the detailed mechanism of this phenomenon is not clear, the inventors estimate the following. The insulating coating layer thickness was approximately the same on almost all surfaces at the joint portion, and therefore magnetic flux transfer occurred over the entire area of the sheet, increasing the area where eddy current loss occurred and increasing the building factor.

Further, the improvement in the building factor was greatest for the Unicores without stress relief annealing (SRA), followed by the Unicores with stress relief annealing. On the other hand, the results were comparable for the Trancocores and the laminate iron cores. That is, in the case of the Trancocores and the laminate iron cores, the magnetic permeability is equal within the iron cores, and the magnetic flux passes through the path with the shortest magnetic path, tending to concentrate inside the iron cores. Therefore, it is considered that the magnetic flux transfer is concentrated on the inside, resulting in an excessively large area where the magnetic flux transfer occurs on the inside, and thus an increase in eddy current loss. On the other hand, in the Unicores that were not subjected to stress relief annealing, the strain of the bent portions decreases the magnetic permeability inside the iron core, making it less likely for magnetic flux to concentrate on the inside and homogenizing the amount of magnetic flux transfer in the lamination direction. As a result, it is thought that the influence of variations in the thickness of the insulating coating became evident. Further, in the case of the Unicores that had been subjected to stress relief annealing, it is thought that the stress at the bent portions had not been completely removed, and therefore only an intermediate level of improvement was demonstrated. From the above results, it was found that in the configuration of the present disclosure, when the standard deviation $\sigma$ is 2 $\mu$m or more and 5 $\mu$m or

less, the building factor can be improved more efficiently. The standard deviation $\sigma$ is more preferably 2.5 $\mu$m or more. The standard deviation $\sigma$ is more preferably 4.5 $\mu$m or less. Hereinafter, the "standard deviation $\sigma$" refers to the standard deviation of the thickness of the insulating coating in a region between a steel sheet discontinuity of one single layer and a steel sheet discontinuity of another of the single layers adjacent in the lamination direction.

(Experiment 2)

Further, the interval $\Delta d$ was studied in detail. That is, steel slabs having the chemical composition indicated in Table 1 were used to produce cold-rolled steel strips of grain-oriented electrical steel sheets as test material by a typical production process. The surface roughness of the obtained cold-rolled steel strips in the transverse direction and the rolling direction was measured using a laser meter. Next, the cold-rolled steel strips were subjected to decarburization annealing, application of an annealing separator, final annealing, and application of a tension coating. Thereafter, the thicknesses of the forsterite film and the tension coating in the transverse direction and the rolling direction of the steel strips were measured by X-ray fluorescence analysis. In the measurements, the thickness (coating weight) of each film or coating was calculated from fluorescent X-ray intensity using a calibration curve. The total thickness obtained for the forsterite film and the tension coating is defined as the thickness of the insulating coating. The standard deviation $\sigma$ of the thickness of the insulating coating layer was calculated from the thickness distribution of the insulating coating.

The locations where $\sigma$ was approximately 3 $\mu$m (3 $\mu$m $\pm$ 0.2 $\mu$m) were selected to be the steel sheet discontinuities, and three-phase three-leg Unicore wound iron cores each having a lamination thickness of 30 mm, height of 300 mm, and width of 210 mm, and three-phase three-leg laminate iron cores each having a lamination thickness of 30 mm, height of 420 mm, and overall width of 420 mm were produced. During the production of the iron cores, $\Delta d$ was varied from 0.5 mm to 25 mm. The iron cores each had a step lap structure with a five-step period.

Further, samples were cut out from the cold-rolled steel strips, and the iron loss ($W_{17/50}$) of the material (cold-rolled steel strip) was measured by the single sheet magnetic property measurement method described in JIS C2556.

Next, using these iron cores, transformer core loss was measured when the magnetic flux density in the iron core legs was 1.7 T at a frequency of 50 Hz. In the measurement, no-load loss was measured using a wattmeter. The building factor was calculated from the obtained transformer core loss and the material iron loss measured earlier.

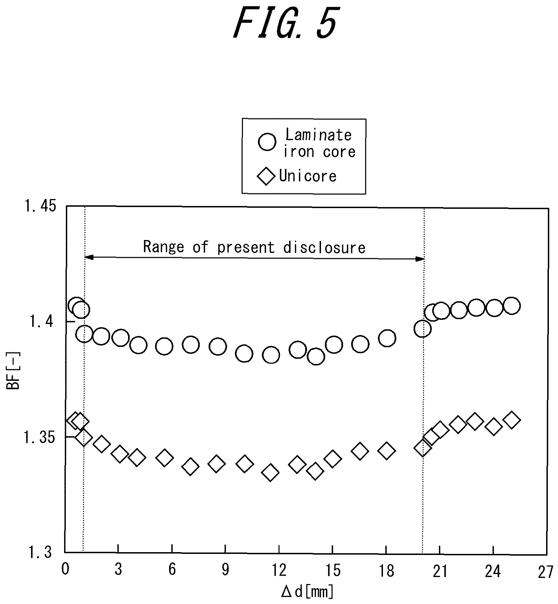

FIG. 5 is a graph plotting the measured building factor versus $\Delta d$. As illustrated in FIG. 5, it was confirmed that the building factor was further improved when $\Delta d$ was in a range from 1 mm to 20 mm. This is thought to be because when $\Delta d$ exceeds 20 mm, the region in which eddy current loss occurs due to magnetic flux transfer increases, increasing the building factor. On the other hand, in the region where $\Delta d$ is less than 1 mm, the area of the magnetic flux transfer portion becomes too small, resulting in an increase in the amount of magnetic flux transfer per unit area and an increase in the building factor. From the above results, it was found that in the configuration of the present disclosure, when $\Delta d$ is 1 mm or more and 20 mm or less, the building factor can be improved more efficiently. $\Delta d$ is more preferably 3 mm or more. Further, $\Delta d$ is more preferably 15 mm or less.

In the above experiments, one grain-oriented electrical steel sheet with insulating coating was used as a single layer. However, even when a stack of a plurality of grain-oriented electrical steel sheets with insulating coating was used as a single layer, similar trends to the results illustrated in FIG. 4 and FIG. 5 were obtained.

The following is a detailed description of preferred embodiments of the present disclosure. However, the present disclosure is not limited only to the configurations according to these embodiments, and various changes can be made without departing from the spirit of the present disclosure.

[Grain-oriented electrical steel sheet]

According to the present disclosure, the standard deviation of the thickness of the insulating coating can be controlled to achieve a desired effect. Therefore, any grain-oriented electrical steel sheet can be used according to the present disclosure.

Further, the method of producing the grain-oriented electrical steel sheet is not particularly limited, and may be a typical method. The chemical composition of the steel material (slab) used to produce the grain-oriented electrical steel sheet is not particularly limited, but generally, it is sufficient that the chemical composition allows secondary recrystallization to occur. Further, when an inhibitor is used, for example, when an AlN inhibitor is used, steel material containing Al and N may be used. Similarly, when MnS, MnSe inhibitors are used, steel material containing Mn and at least one of Se or S may be used. Of course, both inhibitors may be used together. When at least one of Al, N, S, or Se is added, the preferred content of each element is as follows:

Al: 0.010 mass% to 0.065 mass%,
N: 0.0050 mass% to 0.0120 mass%,
S: 0.005 mass% to 0.030 mass%, and

Se: 0.005 mass% to 0.030 mass%

Further, the present disclosure may also be applied to a grain-oriented electrical steel sheet without an inhibitor, with limited Al, N, S, and Se content. In such a case, the content of Al, N, S, and Se is preferably limited to:

Al: less than 0.010 mass%,
N: less than 0.0050 mass%,
S: less than 0.0050 mass%, and
Se: less than 0.0050 mass%.

Basic components and optionally added components of steel material (steel slab) for the production of the grain-oriented electrical steel sheet are described below.

C: 0.08 mass% or less

C may be added to improve the hot-rolled sheet microstructure. However, when C content exceeds 0.08 mass%, it becomes difficult to decarburize the steel during the production process to 50 ppm by mass or less, which is the point where magnetic aging does not occur. The C content is therefore preferably 0.08 mass% or less. On the other hand, secondary recrystallization occurs even in steel material not containing C, and therefore the lower limit of the C content is not particularly limited and may be 0 mass%.

Si: 2.0 mass% to 8.0 mass%

Si is an effective element in increasing the electrical resistance of steel and decreasing iron loss. However, when Si content is less than 2.0 mass%, the improvement effect is not fully realized. On the other hand, when the Si content exceeds 8.0 mass%, workability and sheet passing properties degrade significantly, and magnetic flux density also decreases. The Si content is therefore preferably 2.0 mass% or more. The Si content is therefore preferably 8.0 mass% or less.

Mn: 0.005 mass% to 1.0 mass%

Mn is an element required for improving hot workability, but a sufficient effect is difficult to obtain when content is less than 0.005 mass%. On the other hand, when the content exceeds 1.0 mass%, magnetic flux density degrades. The Mn content is therefore preferably 0.005 mass% or more. The Mn content is therefore preferably 1.0 mass% or less.

The chemical composition of the steel material according to one embodiment may include the above components, with the balance being Fe and inevitable impurity.

The above chemical composition may further contain at least one of the following optionally added components that are known to be effective in improving magnetic properties.

Ni: 0.03 mass% to 1.50 mass%,
Sn: 0.01 mass% to 1.50 mass%,
Sb: 0.005 mass% to 1.50 mass%,
Cu: 0.03 mass% to 3.0 mass%,
P: 0.03 mass% to 0.50 mass%,
Mo: 0.005 mass% to 0.10 mass%, and
Cr: 0.03 mass% to 1.50 mass%.

Ni is an effective element for improving hot-rolled sheet microstructure and improving magnetic properties. However, when Ni content is less than 0.03 mass%, the effect on improving magnetic properties is small. When the Ni content is more than 1.50 mass%, secondary recrystallization is unstable, and magnetic properties degrade. Therefore, when Ni is added, the Ni content is preferably in the range from 0.03 mass% to 1.50 mass%.

Further, Sn, Sb, Cu, P, Mo, and Cr are also elements that improve magnetic properties, but their effects are not sufficient when content is less than the lower limit described above. When the content exceeds the upper limit described above, growth of secondary recrystallized grains is inhibited and magnetic properties degrade. Therefore, the content of these components is preferably within the above ranges.

A steel material (slab) having the chemical composition described above is subjected to hot rolling and then hot-rolled sheet annealing. The steel strip is then cold rolled once, or twice or more, to produce a steel strip having a final sheet thickness. The steel strip is then subjected to primary recrystallization annealing (decarburization annealing). Next, an annealing separator is applied to the surface of the steel strip, which is then coiled into a coil and subjected to final annealing for the purpose of secondary recrystallization. The steel strip after the final annealing is subjected to flattening annealing and a tension coating is formed, thereby producing a steel strip of a grain-oriented electrical steel sheet.

During the primary recrystallization annealing, the steel strip is decarburized and the C content decreases. Further, during the final annealing the steel strip undergoes purification, resulting in a decrease in Al, N, S, Se, and the like. As a result of the above, the content of C, Al, N, S, and Se in the finally obtained grain-oriented electrical steel sheet are decreased to impurity levels. Therefore, in the chemical composition of the grain-oriented electrical steel strip, C, Al, N, S, and Se may be considered as inevitable impurity. Typically, the Al content is 0.01 mass% or less, and the C, N, S and Se content is 0.005 mass% or less each. The content of other components may be considered to be the same as the content at the time of the steel slab.

After the flattening annealing, a magnetic domain refining process may be further carried out in which thermal strain is formed on the surface of the grain-oriented electrical steel sheet (steel strip) by irradiating the surface with an energy beam.

• Insulating coating layer

The insulating coating is formed on the surface of the grain-oriented electrical steel sheet. The insulating coating refers to a layer including either or both of a metal oxide layer (that is, a forsterite film) formed on the steel substrate and a tension coating formed by applying a tension coating agent thereon and then baking. The insulating coating is preferably formed on both sides of the grain-oriented electrical steel sheet.

According to the present disclosure, the iron core for a transformer is formed by laminating a plurality of single layers each including one or more grain-oriented electrical steel sheets with insulating coating.

• Standard deviation of insulating coating thickness (variation in insulating coating thickness)

As indicated in Experiment 1 above, when the standard deviation $\sigma$ of the thickness of the insulating coating in the region between a steel sheet discontinuity of one single layer and a steel sheet discontinuity of another single layer adjacent in the lamination direction is less than 2 $\mu$m, the building factor increases. Therefore, according to the present disclosure, the standard deviation $\sigma$ is 2 $\mu$m or more. The standard deviation $\sigma$ is preferably 2.5 $\mu$m or more. On the other hand, when the standard deviation $\sigma$ is greater than 5 $\mu$m, the building factor increases. Therefore, according to the present disclosure, the standard deviation $\sigma$ is 5 $\mu$m or less. The standard deviation $\sigma$ is preferably 4.5 $\mu$m or less. In this way, by setting the standard deviation $\sigma$ to be 2 $\mu$m or more and 5 $\mu$m or less, it is possible to suppress an increase in the building factor due to magnetic flux transfer in the lamination direction of the iron core.

The above-mentioned effects of the present disclosure are sufficiently obtainable even in commercial frequency bands such as 50 Hz and 60 Hz, but as indicated in Example 2 described later, the higher the frequency, the greater the effect. The reason for this has not yet been clarified, but the inventors think the reason may be as follows. Under high frequency conditions, the number of times that magnetic flux transfer occurs between layers increases, and the resulting change in magnetic flux density in the out-of-plane direction also becomes large, increasing the contribution of out-of-plane eddy current loss. According to the present disclosure, the distribution of this magnetic flux transfer is optimized, which is highly effective in improving the out-of-plane eddy current loss. For this reason, it is thought that a greater effect is obtainable at higher frequencies.

Therefore, the iron core for a transformer according to the present disclosure may be used in any frequency band, but is particularly suitable for use in high frequency bands such as 100 Hz or higher. However, when the frequency is too high, the magnetic permeability of the grain-oriented electrical steel sheet decreases significantly, and a sufficient effect may not be obtained. Therefore, the iron core for a transformer according to the present disclosure is preferably used in a frequency band of 10,000 Hz or less. The iron core for a transformer is more preferably used in a frequency band of 5000 Hz or less. In other words, the iron core for a transformer according to an embodiment of the present disclosure may be a high-frequency iron core for a transformer from 100 Hz to 10,000 Hz.

• Method of controlling standard deviation $\sigma$

The value of the standard deviation $\sigma$ is an index representing the degree of variation in the thickness of the insulating coating. The variation in the thickness of the insulating coating changes depending on the steel substrate surface roughness and the sum of the surface roughness of each layer that constitutes the insulating coating. Therefore, the standard deviation $\sigma$ may be adjusted by controlling the roughness of the steel sheet surface after rolling, variation in the amount of annealing separator applied during secondary recrystallization annealing, variation in the amount of tension coating agent applied during flattening annealing, and the like.

The roughness of the steel sheet surface after rolling can be measured, for example, by using a laser meter.

Specifically, the surface roughness distribution over the entire length and width of a grain-oriented electrical steel strip that has been cold-rolled to the final sheet thickness is measurable using a laser meter. Further, coating weight distribution of the insulating coating layer in the finally obtained grain-oriented electrical steel strip is measurable, for example, by fluorescence X-ray analysis. Specifically, the coating weight distribution over the entire length and width of the steel strip after the processes of decarburization annealing, application of an annealing separator, final annealing, and formation of a tension coating is calculable from fluorescence X-ray intensity of the main component of the insulating coating layer.

When producing a grain-oriented electrical steel sheet, feedback control based on these measurement results may be carried out to control the application conditions of the annealing separator and tension coating agent. Further, by adjusting roller roughness during operation and viscosity of an applied agent, it is possible to control the variation at any desired location.

Further, as a method of controlling the variation with precision, it is also effective to finely vibrate the steel sheet by irradiation with ultrasonic waves when applying the annealing separator or tension coating agent, thereby promoting spreading of the applied agent. The standard deviation $\sigma$ is controllable by appropriately combining the above-mentioned techniques in terms of work hours, manufacturability, and the like.

• Method of evaluating standard deviation of insulating coating thickness (variation in insulating coating thickness)

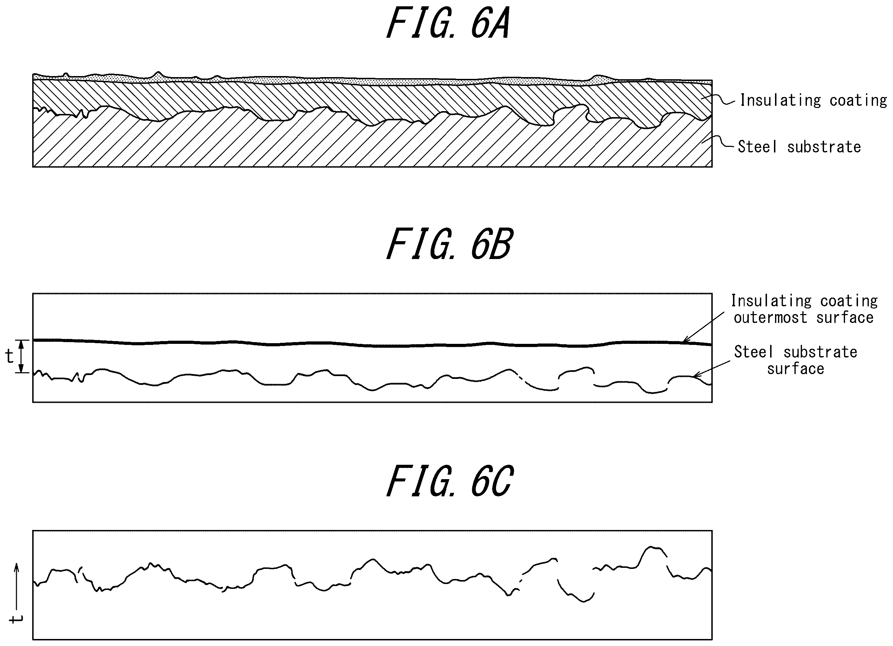

The standard deviation $\sigma$ may be evaluated by carrying out image interpretation on a cross-section image (C-section) perpendicular to the rolling direction of the grain-oriented electrical steel sheet with an insulating coating image captured with a SEM. At least ten C-section observation samples are cut from locations corresponding to the joint portions of the iron core and the vicinity in different locations perpendicular to the rolling direction of the original steel strip, and the cross-sections are observed. FIG. 6A is a schematic diagram of a C-section observation image obtained by SEM. A line profile of the insulating coating (FIG. 6B) is obtainable from the C-section observation image by extracting contours using the OpenCV library for Python. From the line profile thus obtained, the thickness t of the insulating coating at each position is determined (FIG. 6C). The thickness t is defined as the shortest distance between the outermost surface of the insulating coating of the grain-oriented electrical steel sheet and the surface of the steel substrate (the boundary between the metal oxide layer and the steel substrate). The thickness may be calculated for each position in the SEM image, with one pixel being the unit length. This calculation is carried out for ten or more samples. The variation in t in the C-section observation images of all samples obtained in this manner is defined as the variation (standard deviation $\sigma$) in the thickness of the insulating coating according to the present disclosure. The number of samples N is preferably 10 or more. N is more preferably 15 or more.

By deriving a correlation equation from the insulating coating thickness thus determined, the surface roughness of the steel strip after production, and the coating weight distribution of the annealing separator and the tension coating agent, it becomes possible to predict the insulating coating thickness from the surface roughness and the coating weight distribution, and the standard deviation $\sigma$ of the insulating coating thickness at a joint portion can be determined.

• Interval $\Delta d$ of 1 mm or more and 20 mm or less

As described above, when between the steel sheet discontinuity of one single layer and the steel sheet discontinuity of another single layer adjacent in the lamination direction, the interval $\Delta d$ in the direction of magnetic flux flow is 1 mm or more, the building factor is further improved. The interval $\Delta d$ is therefore preferably 1 mm or more. The interval $\Delta d$ is more preferably 3 mm or more. On the other hand, when the interval $\Delta d$ is 20 mm or less, the building factor is further improved. The interval $\Delta d$ is therefore preferably 20 mm or less. The interval $\Delta d$ is more preferably 15 mm or less.

Regarding processes and production conditions other than those described above, a known method of producing a grain-oriented electrical steel sheet may be appropriately used.

The sheet thickness of the grain-oriented electrical steel sheet is not particularly limited. The sheet thickness is preferably 0.01 mm or more. The sheet thickness is more preferably 0.05 mm or more. On the other hand, the sheet thickness is preferably 0.35 mm or less. The sheet thickness is more preferably 0.30 mm or less. According to an embodiment of the present disclosure, the sheet thickness is preferably 0.25 mm or less. The sheet thickness is more preferably 0.23 mm or less. In this way, when the sheet thickness of the grain-oriented electrical steel sheet is relatively thin, the grain-oriented electrical steel sheet can be used particularly favorably in a high frequency band (100 Hz to 10,000 Hz). According to another embodiment of the present disclosure, the sheet thickness is preferably 0.10 mm or more. The sheet thickness is more preferably 0.15 mm or more. In this way, when the sheet thickness of the grain-oriented electrical steel sheet is relatively large, the grain-oriented electrical steel sheet can be used particularly favorably in a commercial frequency band.

Further, the thickness of the insulating coating is not particularly limited. The thickness is preferably 0.5 $\mu$m or more. The thickness is more preferably 0.8 $\mu$m or more. On the other hand, the thickness is preferably 4 $\mu$m or less. The thickness is more preferably 3 $\mu$m or less.

The number of steel sheets constituting one single layer is not particularly limited, and may be any number equal to or greater than one. Typically, four or fewer sheets are preferred. Three or fewer sheets are more preferred. In other words, a single layer, which is a lamination unit constituting the iron core of the present disclosure, may be a laminate of at least one sheet, and preferably one to four sheets, of grain-oriented electrical steel sheets with insulating coating.

On the other hand, the number of single layers to be laminated, in other words, the total number of laminated grain-oriented electrical steel sheets, varies greatly depending on the capacity of the transformer to be produced and the thickness of the grain-oriented electrical steel sheets to be used. Therefore, there are no particular limitations and the number may be determined appropriately depending on the capacity of the transformer and the like.

[Iron core]

The form of the iron core for a transformer according to the present disclosure is not particularly limited, and may be either a wound iron core or a laminate iron core. The iron core according to an embodiment of the present disclosure may be a wound iron core of grain-oriented electrical steel sheets wound in the rolling direction of the steel sheets. The wound iron core may have a bent portion that is bent along the winding direction. Further, the iron core according to another embodiment of the present disclosure may be a laminate iron core of a lamination of a plurality of single layers each being a combination of a plurality of pieces of grain-oriented electrical steel sheet in the same plane.

EXAMPLES

The present disclosure is described in detail below, based on examples. The following examples are merely preferred examples of the present disclosure, and the present disclosure is not limited in any way by these examples. It is also possible to implement the present disclosure by making modifications without departing from the scope and sprit of the disclosure, and such modifications are also encompassed by the technical scope of the disclosure.

(Example 1)

Grain-oriented electrical steel sheets with insulating coating were produced using steel slabs having the chemical composition indicated in Table 2. Specifically, first, cold-rolled steel strips were obtained from the steel slabs by a typical production process. Next, the cold-rolled steel strips were subjected to a shot blasting treatment using shot particles of different sizes to roughen the surface of the steel strips. Thereafter, the cold-rolled steel strips were successively subjected to decarburization annealing, application of an annealing separator, secondary recrystallization annealing, flattening annealing, and formation of an insulating coating to obtain steel strips of grain-oriented electrical steel sheets with insulating film.

Samples measuring 100 mm in width and 280 mm in length were cut out from the obtained steel strips. The iron loss ($W_{17/50}$) of the samples was measured by the single sheet magnetic property measurement method described in JIS C2556.

Further, the standard deviation $\sigma$ was calculated from the steel sheet surface roughness distribution and the coating weight distribution of the insulating coating layer measured during sheet passing. Iron cores for transformers were produced using single sheets cut out from a steel strip coil so that the standard deviation $\sigma$ was the value listed in Tables 3 to 5. The following three types of iron cores for transformers were produced, which differ in core shape and whether or not they were subjected to stress relief annealing (SRA). At that time, the lap length $\Delta d$ was changed between 0.5 mm and 22 mm.

- Three-phase laminate iron core model transformer: no SRA (Table 3)
- Wound iron core model transformer (Unicore): no SRA (Table 4)
- Wound iron core model transformer (Unicore): with SRA (Table 5)

For the iron cores thus obtained, the transformer core loss was measured when the magnetic flux density in the iron core legs was 1.7 T at a frequency of 50 Hz. In the measurement, no-load loss was measured using a wattmeter. The building factor (BF) was calculated from the obtained transformer core loss and the material iron loss measured previously. The results are listed in Tables 3 to 5. As can be seen from these results, the iron cores for transformers satisfying the conditions of the present disclosure had good results for building factor (BF).

Tables 3 to 5 also list the standard deviation $\sigma$ in the legs of the iron cores. As can be seen from the results in Tables 3 to 5, when the standard deviation in the joint portions is 2 $\mu$m to 5 $\mu$m, the desired properties are obtained regardless of the values of the standard deviation in the legs.

# EP 4 675 653 A1

[Table 2]

Table 2

| Chemical composition (mass%) | | | | | | | |
|---|---|---|---|---|---|---|---|
| C | Si | Mn | Ni | Al | N | Se | S |
| 0.06 | 3.6 | 0.3 | 0.01 | 0.0170 | 0.006 | 0.0100 | 0.0015 |
| * The balance being Fe and inevitable impurity. | | | | | | | |

[Table 3]

Table 3

| No. | Core shape | SRA | Standard deviation σ | | Δd (mm) | BF | Remarks |
|---|---|---|---|---|---|---|---|
| | | | Joint portion | Leg | | | |
| 1 | Laminate iron core | No | **1** | 1 | 0.5 | 1.48 | **Comparative Example** |
| 2 | Laminate iron core | No | 2 | 1 | 0.5 | 1.38 | Example |
| 3 | Laminate iron core | No | 3 | 2 | 0.5 | 1.36 | Example |
| 4 | Laminate iron core | No | 5 | 3 | 0.5 | 1.38 | Example |
| 5 | Laminate iron core | No | **5.5** | 4 | 0.5 | 1.48 | **Comparative Example** |
| 6 | Laminate iron core | No | **6** | 5.5 | 0.5 | 1.48 | **Comparative Example** |
| 7 | Laminate iron core | No | **1** | 1 | 1 | 1.45 | **Comparative Example** |
| 8 | Laminate iron core | No | 2 | 1 | 1 | 1.35 | Example |
| 9 | Laminate iron core | No | 3 | 2 | 1 | 1.35 | Example |
| 10 | Laminate iron core | No | 5 | 3 | 1 | 1.35 | Example |
| 11 | Laminate iron core | No | **5.5** | 4 | 1 | 1.45 | **Comparative Example** |
| 12 | Laminate iron core | No | **6** | 5.5 | 1 | 1.45 | **Comparative Example** |
| 13 | Laminate iron core | No | **1** | 1 | 4 | 1.43 | **Comparative Example** |
| 14 | Laminate iron core | No | 2 | 1 | 4 | 1.34 | Example |
| 15 | Laminate iron core | No | 3 | 2 | 4 | 1.33 | Example |
| 16 | Laminate iron core | No | 5 | 3 | 4 | 1.34 | Example |
| 17 | Laminate iron core | No | **5.5** | 4 | 4 | 1.43 | **Comparative Example** |
| 18 | Laminate iron core | No | **6** | 5.5 | 4 | 1.43 | **Comparative Example** |
| 19 | Laminate iron core | No | **1** | 1 | 15 | 1.43 | **Comparative Example** |
| 20 | Laminate iron core | No | 2 | 1 | 15 | 1.34 | Example |
| 21 | Laminate iron core | No | 3 | 2 | 15 | 1.33 | Example |
| 22 | Laminate iron core | No | 5 | 3 | 15 | 1.34 | Example |
| 23 | Laminate iron core | No | **5.5** | 4 | 15 | 1.43 | **Comparative Example** |
| 24 | Laminate iron core | No | **6** | 5.5 | 15 | 1.43 | **Comparative Example** |
| 25 | Laminate iron core | No | **1** | 1 | 20 | 1.45 | **Comparative Example** |
| 26 | Laminate iron core | No | 2 | 1 | 20 | 1.35 | Example |
| 27 | Laminate iron core | No | 3 | 2 | 20 | 1.33 | Example |

11

(continued)

| No. | Core shape | SRA | Standard deviation σ | | Δd (mm) | BF | Remarks |
|---|---|---|---|---|---|---|---|
| | | | Joint portion | Leg | | | |
| 28 | Laminate iron core | No | 5 | 3 | 20 | 1.35 | Example |
| 29 | Laminate iron core | No | **5.5** | 4 | 20 | 1.45 | **Comparative Example** |
| 30 | Laminate iron core | No | **6** | 5.5 | 20 | 1.45 | **Comparative Example** |
| 31 | Laminate iron core | No | **1** | 1 | 26 | 1.48 | **Comparative Example** |
| 32 | Laminate iron core | No | 2 | 1 | 26 | 1.38 | Example |
| 33 | Laminate iron core | No | 3 | 2 | 26 | 1.36 | Example |
| 34 | Laminate iron core | No | 5 | 3 | 26 | 1.38 | Example |
| 35 | Laminate iron core | No | **5.5** | 4 | 26 | 1.48 | **Comparative Example** |
| 36 | Laminate iron core | No | **6** | 5.5 | 26 | 1.48 | **Comparative Example** |

[Table 4]

Table 4

| No. | Core shape | SRA | Standard deviation σ | | Δd (mm) | BF | Remarks |
|---|---|---|---|---|---|---|---|
| | | | Joint portion | Leg | | | |
| 37 | Wound iron core | No | **1** | 1 | 0.5 | 1.45 | **Comparative Example** |
| 38 | Wound iron core | No | 2 | 1 | 0.5 | 1.35 | Example |
| 39 | Wound iron core | No | 3 | 2 | 0.5 | 1.33 | Example |
| 40 | Wound iron core | No | 5 | 3 | 0.5 | 1.35 | Example |
| 41 | Wound iron core | No | **5.5** | 4 | 0.5 | 1.45 | **Comparative Example** |
| 42 | Wound iron core | No | **6** | 5.5 | 0.5 | 1.45 | **Comparative Example** |
| 43 | Wound iron core | No | **1** | 1 | 1 | 1.42 | **Comparative Example** |
| 44 | Wound iron core | No | 2 | 1 | 1 | 1.32 | Example |
| 45 | Wound iron core | No | 3 | 2 | 1 | 1.32 | Example |
| 46 | Wound iron core | No | 5 | 3 | 1 | 1.32 | Example |
| 47 | Wound iron core | No | **5.5** | 4 | 1 | 1.42 | **Comparative Example** |
| 48 | Wound iron core | No | **6** | 5.5 | 1 | 1.42 | **Comparative Example** |
| 49 | Wound iron core | No | **1** | 1 | 4 | 1.40 | **Comparative Example** |
| 50 | Wound iron core | No | 2 | 1 | 4 | 1.31 | Example |
| 51 | Wound iron core | No | 3 | 2 | 4 | 1.30 | Example |
| 52 | Wound iron core | No | 5 | 3 | 4 | 1.31 | Example |
| 53 | Wound iron core | No | **5.5** | 4 | 4 | 1.40 | **Comparative Example** |
| 54 | Wound iron core | No | **6** | 5.5 | 4 | 1.40 | **Comparative Example** |
| 55 | Wound iron core | No | **1** | 1 | 15 | 1.40 | **Comparative Example** |
| 56 | Wound iron core | No | 2 | 1 | 15 | 1.31 | Example |
| 57 | Wound iron core | No | 3 | 2 | 15 | 1.30 | Example |
| 58 | Wound iron core | No | 5 | 3 | 15 | 1.31 | Example |
| 59 | Wound iron core | No | **5.5** | 4 | 15 | 1.40 | **Comparative Example** |

(continued)

| No. | Core shape | SRA | Standard deviation σ | | Δd (mm) | BF | Remarks |
|---|---|---|---|---|---|---|---|
| | | | Joint portion | Leg | | | |
| 60 | Wound iron core | No | **6** | 5.5 | 15 | 1.40 | **Comparative Example** |
| 61 | Wound iron core | No | **1** | 1 | 20 | 1.42 | **Comparative Example** |
| 62 | Wound iron core | No | 2 | 1 | 20 | 1.32 | Example |
| 63 | Wound iron core | No | 3 | 2 | 20 | 1.30 | Example |
| 64 | Wound iron core | No | 5 | 3 | 20 | 1.32 | Example |
| 65 | Wound iron core | No | **5.5** | 4 | 20 | 1.42 | **Comparative Example** |
| 66 | Wound iron core | No | **6** | 5.5 | 20 | 1.42 | **Comparative Example** |
| 67 | Wound iron core | No | **1** | 1 | 26 | 1.45 | **Comparative Example** |
| 68 | Wound iron core | No | 2 | 1 | 26 | 1.35 | Example |
| 69 | Wound iron core | No | 3 | 2 | 26 | 1.33 | Example |
| 70 | Wound iron core | No | 5 | 3 | 26 | 1.35 | Example |
| 71 | Wound iron core | No | **5.5** | 4 | 26 | 1.45 | **Comparative Example** |
| 72 | Wound iron core | No | **6** | 5.5 | 26 | 1.45 | **Comparative Example** |

[Table 5]

Table 5

| No. | Core shape | SRA | Standard deviation σ | | Δd (mm) | BF | Remarks |
|---|---|---|---|---|---|---|---|
| | | | Joint portion | Leg | | | |
| 73 | Wound iron core | Yes | **1** | 1 | 0.5 | 1.42 | **Comparative Example** |
| 74 | Wound iron core | Yes | 2 | 1 | 0.5 | 1.32 | Example |
| 75 | Wound iron core | Yes | 3 | 2 | 0.5 | 1.30 | Example |
| 76 | Wound iron core | Yes | 5 | 3 | 0.5 | 1.32 | Example |
| 77 | Wound iron core | Yes | **5.5** | 4 | 0.5 | 1.42 | **Comparative Example** |
| 78 | Wound iron core | Yes | **6** | 5.5 | 0.5 | 1.42 | **Comparative Example** |
| 79 | Wound iron core | Yes | **1** | 1 | 1 | 1.39 | **Comparative Example** |
| 80 | Wound iron core | Yes | 2 | 1 | 1 | 1.29 | Example |
| 81 | Wound iron core | Yes | 3 | 2 | 1 | 1.29 | Example |
| 82 | Wound iron core | Yes | 5 | 3 | 1 | 1.29 | Example |
| 83 | Wound iron core | Yes | **5.5** | 4 | 1 | 1.39 | **Comparative Example** |
| 84 | Wound iron core | Yes | **6** | 5.5 | 1 | 1.39 | **Comparative Example** |
| 85 | Wound iron core | Yes | **1** | 1 | 4 | 1.37 | **Comparative Example** |
| 86 | Wound iron core | Yes | 2 | 1 | 4 | 1.28 | Example |
| 87 | Wound iron core | Yes | 3 | 2 | 4 | 1.27 | Example |
| 88 | Wound iron core | Yes | 5 | 3 | 4 | 1.28 | Example |
| 89 | Wound iron core | Yes | **5.5** | 4 | 4 | 1.37 | **Comparative Example** |
| 90 | Wound iron core | Yes | **6** | 5.5 | 4 | 1.37 | **Comparative Example** |
| 91 | Wound iron core | Yes | **1** | 1 | 15 | 1.37 | **Comparative Example** |

(continued)

| No. | Core shape | SRA | Standard deviation σ | | Δd (mm) | BF | Remarks |
|---|---|---|---|---|---|---|---|
| | | | Joint portion | Leg | | | |
| 92 | Wound iron core | Yes | 2 | 1 | 15 | 1.28 | Example |
| 93 | Wound iron core | Yes | 3 | 2 | 15 | 1.27 | Example |
| 94 | Wound iron core | Yes | 5 | 3 | 15 | 1.28 | Example |
| 95 | Wound iron core | Yes | _5.5_ | 4 | 15 | 1.37 | **Comparative Example** |
| 96 | Wound iron core | Yes | _6_ | 5.5 | 15 | 1.37 | **Comparative Example** |
| 97 | Wound iron core | Yes | _1_ | 1 | 20 | 1.39 | **Comparative Example** |
| 98 | Wound iron core | Yes | 2 | 1 | 20 | 1.29 | Example |
| 99 | Wound iron core | Yes | 3 | 2 | 20 | 1.27 | Example |
| 100 | Wound iron core | Yes | 5 | 3 | 20 | 1.29 | Example |
| 101 | Wound iron core | Yes | _5.5_ | 4 | 20 | 1.39 | **Comparative Example** |
| 102 | Wound iron core | Yes | _6_ | 5.5 | 20 | 1.39 | **Comparative Example** |
| 103 | Wound iron core | Yes | _1_ | 1 | 26 | 1.42 | **Comparative Example** |
| 104 | Wound iron core | Yes | 2 | 1 | 26 | 1.32 | Example |
| 105 | Wound iron core | Yes | 3 | 2 | 26 | 1.30 | Example |
| 106 | Wound iron core | Yes | 5 | 3 | 26 | 1.32 | Example |
| 107 | Wound iron core | Yes | _5.5_ | 4 | 26 | 1.42 | **Comparative Example** |
| 108 | Wound iron core | Yes | _6_ | 5.5 | 26 | 1.42 | **Comparative Example** |

(Example 2)

Grain-oriented electrical steel sheets with insulating coating were produced using steel slabs having the chemical composition indicated in Table 2. Specifically, first, cold-rolled steel strips having the thicknesses listed in Table 6 were obtained from the steel slabs by a typical production process. Next, the cold rolled steel strips were subjected to a shot blasting treatment with varying shot particle size to control the surface condition of the steel strips. Thereafter, the cold-rolled steel strips were successively subjected to decarburization annealing, application of an annealing separator, secondary recrystallization annealing, flattening annealing, and formation of an insulating coating to obtain steel strips of grain-oriented electrical steel sheets with insulating film.

Samples measuring 100 mm in width and 280 mm in length were cut out from the obtained steel strips. The iron loss of the samples was measured by the single sheet magnetic property measurement method described in JIS C2556. The material iron losses were measured at the magnetic flux densities, frequencies, and excitation waveforms listed in Table 6.

Further, the standard deviation σ was calculated from the steel sheet surface roughness distribution and the coating weight distribution of the insulating coating layer measured during sheet passing. The three-phase laminate iron core model transformer A was produced using single sheets cut out from a steel strip coil so that the standard deviation σ was 3 μm. Similarly, the three-phase laminate iron core model transformer B was produced using single sheets cut out from a steel strip coil so that the standard deviation σ was 6 μm. In all the model transformers, the lap length Δd was 4 mm.

The iron cores thus obtained were measured for transformer core loss. The measurement of the transformer core loss was carried out at the magnetic flux densities, frequencies, and excitation waveforms listed in Table 6, similarly to the material iron loss. Here, the magnetic flux density is the magnetic flux density in the leg of the iron core. At this time, the excitation waveform was a normal sinusoidal wave, a superimposed waveform with up to tenth order harmonics superimposed, or a square wave. In the measurement, no-load loss was measured using a wattmeter.

From the obtained transformer core losses and the material iron losses previously measured, the building factor $BF_A$ of the model transformer A and the building factor $BF_B$ of the model transformer B were calculated. From the obtained $BF_A$ and $BF_B$ values, the BF improvement rate defined by the following expression was calculated. The values obtained are listed in Table 6. This BF improvement rate can be regarded as an index of the BF improvement effect caused by changing the standard deviation σ from outside the range of the present disclosure (6 μm) to within the range (3 μm).

$$\text{BF improvement rate } (\%) = (\text{BF}_B - \text{BF}_A)/\text{BF}_B \times 100$$

As can be seen from the results in Table 6, the higher the frequency, the greater the effect of improving BF. Further, a higher BF improvement effect was obtained with the superimposed waveform than with the sinusoidal wave, and even higher with the square wave. This is thought to be because the higher the frequency and the more complex the waveform, the larger the change in local magnetic flux density dB/dt due to the magnetic flux transfer, and the greater the contribution of eddy current loss caused by the magnetic flux transfer to the transformer core loss.

[Table 6]

Table 6

| No. | Sheet thickness (mm) | Magnetic flux density (T) | Frequenc y (Hz) | Excitation waveform | BF improvement rate |
|---|---|---|---|---|---|
| 1 | 0.10 | 1.0 | 50 | Sinusoidal wave | 12% |
| 2 | 0.10 | 1.0 | 50 | Superimposed waveform | 13% |
| 3 | 0.10 | 1.0 | 50 | Square wave | 14% |
| 4 | 0.10 | 1.0 | 100 | Sinusoidal wave | 14% |
| 5 | 0.10 | 1.0 | 100 | Superimposed waveform | 15% |
| 6 | 0.10 | 1.0 | 100 | Square wave | 16% |
| 7 | 0.10 | 1.0 | 1000 | Sinusoidal wave | 16% |
| 8 | 0.10 | 1.0 | 1000 | Superimposed waveform | 17% |
| 9 | 0.10 | 1.0 | 1000 | Square wave | 18% |
| 10 | 0.10 | 1.5 | 50 | Sinusoidal wave | 15% |
| 11 | 0.10 | 1.5 | 50 | Superimposed waveform | 16% |
| 12 | 0.10 | 1.5 | 50 | Square wave | 17% |
| 13 | 0.10 | 1.5 | 100 | Sinusoidal wave | 17% |
| 14 | 0.10 | 1.5 | 100 | Superimposed waveform | 18% |
| 15 | 0.10 | 1.5 | 100 | Square wave | 19% |
| 16 | 0.10 | 1.5 | 1000 | Sinusoidal wave | 19% |
| 17 | 0.10 | 1.5 | 1000 | Superimposed waveform | 20% |
| 18 | 0.10 | 1.5 | 1000 | Square wave | 21% |
| 19 | 0.23 | 1.0 | 50 | Sinusoidal wave | 14% |
| 20 | 0.23 | 1.0 | 50 | Superimposed waveform | 15% |
| 21 | 0.23 | 1.0 | 50 | Square wave | 16% |
| 22 | 0.23 | 1.0 | 100 | Sinusoidal wave | 16% |
| 23 | 0.23 | 1.0 | 100 | Superimposed waveform | 17% |
| 24 | 0.23 | 1.0 | 100 | Square wave | 18% |
| 25 | 0.23 | 1.0 | 1000 | Sinusoidal wave | 19% |
| 26 | 0.23 | 1.0 | 1000 | Superimposed waveform | 20% |
| 27 | 0.23 | 1.0 | 1000 | Square wave | 21% |
| 28 | 0.23 | 1.5 | 50 | Sinusoidal wave | 6% |
| 29 | 0.23 | 1.5 | 50 | Superimposed waveform | 8% |

(continued)

| No. | Sheet thickness (mm) | Magnetic flux density (T) | Frequenc y (Hz) | Excitation waveform | BF improvement rate |
|---|---|---|---|---|---|
| 30 | 0.23 | 1.5 | 50 | Square wave | 11% |
| 31 | 0.23 | 1.5 | 100 | Sinusoidal wave | 12% |
| 32 | 0.23 | 1.5 | 100 | Superimposed waveform | 14% |
| 33 | 0.23 | 1.5 | 100 | Square wave | 15% |
| 34 | 0.23 | 1.5 | 1000 | Sinusoidal wave | 15% |
| 35 | 0.23 | 1.5 | 1000 | Superimposed waveform | 17% |
| 36 | 0.23 | 1.5 | 1000 | Square wave | 19% |

REFERENCE SIGNS LIST

1 a to 1f    single layer
2a to 2f    joint portion
3    direction of magnetic flux flow

**Claims**

1.  An iron core for a transformer, the iron core comprising a lamination of a plurality of single layers each comprising one or more sheets of grain-oriented electrical steel sheet with insulating coating, wherein

    each of the single layers has at least one steel sheet discontinuity extending in a direction that intersects with a direction of magnetic flux flow in the single layer, and
    a standard deviation $\sigma$ of a thickness of the insulating coating in a region between a steel sheet discontinuity of one of the single layers and a steel sheet discontinuity of another of the single layers adjacent in a lamination direction is 2 $\mu$m or more and 5 $\mu$m or less.

2.  The iron core for a transformer according to claim 1, wherein between the steel sheet discontinuity of one of the single layers and the steel sheet discontinuity of another of the single layers adjacent in the lamination direction, an interval $\Delta$d in the direction of magnetic flux flow is 1 mm or more and 20 mm or less.

3.  The iron core for a transformer according to claim 1 or 2, wherein the iron core is a wound iron core of the grain-oriented electrical steel sheets wound in the rolling direction of the steel sheets.

4.  The iron core for a transformer according to claim 3, wherein the wound iron core has a bent portion that is bent along the winding direction.

5.  The iron core for a transformer according to claim 1 or 2, wherein the iron core is a laminate iron core comprising a lamination of a plurality of single layers each comprising a combination of a plurality of pieces of grain-oriented electrical steel sheet in the same plane.

6.  A transformer comprising the iron core for a transformer according to any one of claims 1 to 5.

# *FIG. 1*

# *FIG. 2*

EP 4 675 653 A1

## FIG. 3

# FIG. 4

# FIG. 5

*FIG. 6A*

Insulating coating

Steel substrate

*FIG. 6B*

Insulating coating outermost surface

Steel substrate surface

t

*FIG. 6C*

t

## INTERNATIONAL SEARCH REPORT

| International application No. |
|---|
| **PCT/JP2024/019596** |

| A. | CLASSIFICATION OF SUBJECT MATTER |
|---|---|

*H01F 27/245*(2006.01)i; *C21D 8/12*(2006.01)i; *C22C 38/00*(2006.01)i; *C22C 38/60*(2006.01)i; *H01F 30/10*(2006.01)i
FI: H01F27/245 155; C22C38/00 303U; H01F27/245 150; H01F30/10 A; C21D8/12 B; C22C38/60

According to International Patent Classification (IPC) or to both national classification and IPC

| B. | FIELDS SEARCHED |
|---|---|

Minimum documentation searched (classification system followed by classification symbols)

H01F27/245; C21D8/12; C22C38/00; C22C38/60; H01F30/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018/123339 A1 (JFE STEEL CORPORATION) 05 July 2018 (2018-07-05) | 1-6 |
| A | WO 2022/092095 A1 (NIPPON STEEL CORPORATION) 05 May 2022 (2022-05-05) | 1-6 |
| A | JP 2000-260631 A (KAWASAKI STEEL CORP.) 22 September 2000 (2000-09-22) | 1-6 |

☐ Further documents are listed in the continuation of Box C.　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 August 2024** | **20 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/019596**

| Patent document cited in search report | | | Publication date (day/month/year) | Patent family member(s) | | | Publication date (day/month/year) |
|---|---|---|---|---|---|---|---|
| WO | 2018/123339 | A1 | 05 July 2018 | US | 2019/0333662 | A1 | |
| | | | | EP | 3533903 | A1 | |
| | | | | KR | 10-2019-0086531 | A | |
| | | | | CN | 110114508 | A | |
| | | | | RU | 2716364 | C | |
| | | | | KR | 10-2021-0152009 | A | |
| WO | 2022/092095 | A1 | 05 May 2022 | US | 2023/0395293 | A1 | |
| | | | | EP | 4235711 | A1 | |
| | | | | TW | 202316461 | A | |
| | | | | CN | 116348620 | A | |
| | | | | KR | 10-2023-0071169 | A | |
| | | | | CA | 3195981 | A | |
| | | | | AU | 2021370592 | A | |
| JP | 2000-260631 | A | 22 September 2000 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06022179 B
- JP H07192891 A
- JP 2020096100 A
- JP 2005150507 A